# EUROPEAN PATENT SPECIFICATION

(11) **EP 4 124 498 B1**
(45) Date of publication and mention of the grant of the patent: **01.07.2026**
(21) Application number: 21187761.8
(22) Date of filing: 26.07.2021
(51) Int. Cl.: B60L 53/16, H01H 47/32, H01H 9/08

(54) **RELAY CONTROL SYSTEM AND BATTERY SYSTEM**
RELAISSTEUERUNGSSYSTEM UND BATTERIESYSTEM
SYSTÈME DE COMMANDE DE RELAIS ET SYSTÈME DE BATTERIE

(43) Date of publication of application: 01.02.2023
(73) Proprietor: Samsung SDI Co., Ltd., Yongin-si, Gyeonggi-do 17084 (KR)
(72) Inventor: Fritz, Jürgen, 8020 Graz (AT); Trathnigg, Thomas, 8010 Graz (AT); Kovac, Damir, 8020 Graz (AT); Schmiedhofer, Christoph, 8055 Graz (AT); Kurcik, Peter, 8505 St. Nikolai im Sausal (AT)
(74) Representative: Gulde & Partner

(56) References cited:
- WO-A1-2014/125685
- JP-A- 2011 088 598
- US-A1- 2018 072 179
- US-A1- 2020 052 509

## Description

### Field of the Disclosure

The present disclosure relates to a relay control system and a battery system comprising the same. Further, the present disclosure refers to a vehicle including the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

In battery systems, the main contactors, i.e. a relay, need to be opened in case a defined internal loop is interrupted. Known solutions use a so-called hazardous voltage interlock loop, HVIL, which is a closed loop through high voltage components of the vehicle. When this loop is interrupted, hazardous voltages have to be removed to prevent the risk of high voltage accidents for example during service. In particular, the relay needs to open to disconnect the battery voltage in response to a detected interruption of the loop for example for a service case.

For example, such interruption of the HVIL loop may be the result of removing a connector from an interface. In a relay control system, typically a power supply may be electrically connected with a coil of a relay and a relay driver switch may be interconnected between the power supply and the coil. The relay driver switch may be controlled by a controller. A HVIL loop may be fed across an interface and the loop mechanically interrupted be separated when the connector is being separated and removed.

Detection and diagnosis means as additional components may be provided, which may detect and/or diagnose a local interrupt of the HVIL loop. This information may be transmitted to a controller which may control the driver switch to open the relay.

Sometimes, batteries are designed in a way that also battery internal components require such a HVIL. For example, battery internal components typically needing a HVIL may be a manual service disconnect fuse, MSD fuse, a separate service box, or a battery disconnect unit, BDU, or battery junction box, BJB, that is externally attached to the battery pack.

However, not all HVILs have the same requirements on detection and reaction times. Therefore, it could be that even more than two independent HVIL loops are required.

The inclusion of one or even more than one additional internal HVIL in battery systems and battery packs leads to further disadvantages. Such integration requires additional hardware and software functions, for example a HVIL source, a HVIL detector and a diagnosis function in order to detect an interruption of the HVIL. An example of a HVIL system can be found in US 2018/0072179 A1.

If the HVIL is additionally a part of a safety function, an automotive safety integrity level, ASIL, rating, the FIT rates, failure rate in time, of these components and several other safety relevant parameters have to be additionally considered.

It is thus an object of the present disclosure to overcome or reduce at least some of the drawbacks of the prior art and to provide a relay control system and a battery system that does not need an additional HVIL to open the relay when an interrupt at a critical interface has occurred. Additionally, it is a further aspect to increase safety of battery systems and to reduce the amount of hardware involved.

The US 2020/0052509 A1 discloses an electrical system including a connector which is provided on power supply lines. The WO 2014/125685 A1 teaches a circuit breaker capable of interrupting a circuit while simplifying necessary control. The JP 2011 088598 A discloses a power supply circuit in which a blocking member is detachably provided on a power supply path.

### Summary of Invention

Embodiments of the present disclosure seek to solve at least one of the problems existing in the prior art to at least some extent. In particular, a relay control system according to the invention is provided according to claim 1 of the appended set of claims.

The connector may be a service connector or a service plug. An electrical interface may be an interface which allows and electrical current to flow through the connector, when attached thereto. The electrical interface may also be understood as an interface as such or a connection terminal. The term electrically interrupted may mean in other words electrically disconnected or non-conductive, i.e. then no current or no control signal can be transmitted across the interface. The power supply may be an internal supply, i.e. an applied voltage. The power supply may be a DC voltage. However, the power supply, to save energy, may also be an AC voltage, i.e. an AC current may flow through the coil. The voltage of the power supply may be higher than the voltage of the control signals of the controller. For example, the controller may have an output voltage of 5V, and the power supply may have a higher, for example, substantially higher, output voltage. The detachable connector may comprise a conductive portion that may form a conductive section, i.e. an electric continuation, of the routed line across the interface in the connected state. The controller may be a microcontroller. The term routed means that the line among the power supply lines and the relay driver control lines is diverted/lead to the interface and via the interface to one of the relay driver switch, in case of the relay driver control line, or the coil, in case of the power supply line, respectively. The length of a route to the interface may be 0.5m; 0,75m or even 1m, but the invention is not restricted thereto.

The present invention has the advantage that internal control lines which are needed to control the relay replace the HVIL entirely, such that a HVIL is not required anymore to reach the effect of opening the relay in the case of a detachment of the connector at the interface. In particular, the additional hardware units needed in HVIL solutions to detect and diagnose an interrupt at the interface can be omitted. No additional control lines are needed in addition to the control lines which have to be used also in the conventional case. Thus, hardware and software is substantially reduced. When using one of the power supply lines or the relay driver control lines to be routed across the interface, detaching of the connector is directly diagnosable/recognizable through these internal control lines, thus detachment is sensed by the line routed across the interface. Since these internal control lines are used to control the relay, it is an insight of the invention that due to the routing of these internal control lines across the interface, the interruption itself of one of these control lines can be used to control the relay to open. This is also safe, since no additional failure rates need to be considered. Further, the reaction time is fast as there is no additional hardware and software units involved. Thus, hazardous voltages are rapidly prevented and safety is increased.

One of the relay driver control lines is routed across the interface, and wherein the relay driver switch is configured to open the relay, when the relay driver control line is interrupted in response to the connector being detached from the interface. Using the relay driver control line for the driver switch results in that lower currents are lead through the interface and control of the relay can be performed based on lower voltages. This results in lower risk of electrical arcs, damage and current peaks at the interface in the process of detachment of the connector. In particular, the electromechanical compatibility is improved by this solution due to the reduced currents and voltages involved. For example, this embodiment can be used when reduced interferences are required, in particular, when the power supply is used as AC power source.

One of the relay driver control lines may be routed across the interface, and wherein the relay driver switch is configured to open the relay, when a control signal of the controller is interrupted in response to the connector being detached from the interface. The interruption of a control signal is a direct consequence of the detachment of the connector. Therefore, the interruption of a control signal is directly indicative of the detachment of the connector.

The control signal may be a logic high level and the relay driver switch may be configured to open the relay, when the logic high level is interrupted in response to the connector being detached from the interface. A logic high level may for example be a 5V signal, but the invention is not restricted thereto. Thus, when a logic high value, i.e. '1', is applied to the relay driver switch in the default case of the connector being connected or attached to the interface. In response to the detachment of the connector, i.e. the relay driver control line interruption, the logic high value due to the line interruption may not be applied to the relay driver switch. Thus, the logic high value being interrupted is directly indicative of the detachment of the connector, such that the relay control switch open. Then, the power supply is disconnected from the coil of the relay and the relay may open.

The control signal may be an electrical current and the relay driver switch may be configured to open the relay, when the electrical current is interrupted in response to the connector being detached from the interface. When the relay driver control line is interrupted due to the detachment, the electrical current is as well directly interrupted and is thus indicative of the detachment. In other words, the electrical current can immediately drop to zero in response to the detachment of the connector. Based on this drop, the relay driver switch may be configured to open and thus disconnect the power source from the coil to open the relay.

The power supply may be an AC power supply. In this case energy is saved. When using the relay control lines the electromagnetic compatibility is high. Also, DC power supply may be used. In particular, a DC supply may be suitable in case the power supply lines are routed across the interface.

In an embodiment not covered by the claims, one of the power supply lines may be routed across the interface, and wherein the relay is configured to open, when the power supply line is interrupted in response to the connector being detached from the interface. In this case, the current through the coil is directly interrupted when the power supply line is interrupted in response to the connector being detached. This embodiment has the advantage that the reaction time is fast, since the interruption of the power supply line directly prevents an electric current to flow through the coil of the relay.

The one of the power supply lines may be routed across the interface between the relay driver switch and the coil. This leads to reduced reaction times.

The relay driver switch may be a high side driver switch. Thus, the relay driver switch switches the first voltage terminal of the power supply and the coil of the relay is directly connected to the second voltage terminal of the power source. Also, the relay driver switch may be a low side driver switch.

The controller may be configured to close the relay, when the one among the power supply line and the relay driver control line is electrically conductive in response to the connector being connected to the interface.

A further aspect of the present invention refers to a battery system comprising a relay control system according to one of the above embodiments. The battery system may comprise a plurality of battery cells electrically connected between a first output terminal and second output terminal. Output power lines may be respectively connected to the first terminal and the second output terminal, wherein the relay is integrated in at least one of the power lines. The battery system may have the same advantages as described above.

A further aspect refers to a vehicle, in particular an electrical vehicle, including a battery system as disclosed above.

### Brief Description of the Drawings

Features will become apparent to those of ordinary skill in the art by describing in detail exemplary embodiments with reference to the attached drawings in which:
- Fig. 1: illustrates a relay control system and a battery system according to a first embodiment not covered by the appended sei of claims; and
- Fig. 2: illustrates a relay control system and a battery system according to a second embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

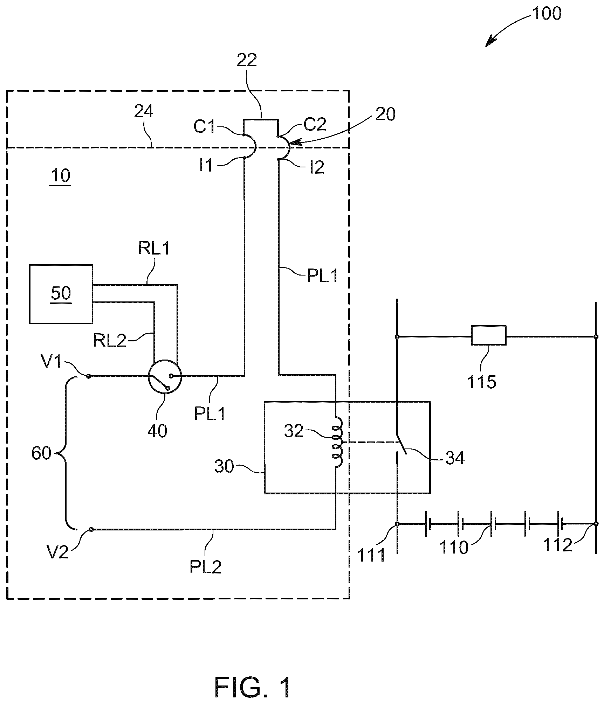

Fig. 1 shows a schematic illustration of a relay control system 10 and a battery system 100 according to a first embodiment not covered by the appended set of claims.

The relay control system 10 comprises an electrical interface 20. The interface 20 may be formed in a support panel 24 and/or in a support frame of the relay control system of the battery system. The support panel 24 may be part of a housing. A connector 22, for example a service connector, is detachably connected to the interface 20. The interface 20 may comprise a first interface terminal I1 and a second interface terminal I2. The connector 22 may comprise a first connector terminal C1 and a second connector terminal C2, which are respectively connected to the corresponding interface terminals I1, I2. The connector 22 and/or the interface 20 may comprise mechanical fixation elements which allow a mechanical coupling which can be released, for example by a user for a service.

That is, the connector 22 can repeatedly detached from and attached to the interface 20. The connector 22 may preferably be a service plug or a service connector, which is removed from the interface 20 for the purpose of a service to be performed. The connector 22 may comprise a conductive section as illustrated in the Figure, which, when the connector 22 is connected to the interface 20, electrically connects the interface terminals I1, I2 through the conductive section of the connector 22.

The relay control system 10 further comprises a power supply 60, which may be an integrated power supply. The power supply 60 may include a first voltage terminal V1 and a second voltage terminal V2. In this embodiment, the power supply may be preferably a DC power supply, but may also be an AC power supply. When the power supply 60 is a DC power supply, the first voltage terminal V1 may be a plus pole and the second voltage terminal V2 may be a minus pole, for example. The power supply 60 may provide a current of for example 1A and a voltage of for example more than or substantially more than 5V, but the invention is not restricted thereto. The power supply 60 is electrically connected in parallel with a coil 32 of a relay 30. Thus, the power supply 60 serves to provide a current to flow through the coil 32. For example, when the current provided by the power supply flows through the coil 32, the relay 30 may be in a closed or conductive state. The electrical connection of the power supply 60 to the coil 32 is provided by power supply lines PL1; PL2. The first power supply line PL1 may interconnect the first voltage terminal V1 with the coil 32. The second power supply line PL2 may interconnect the second voltage terminal V2 with the coil 32, respectively.

The relay control system 10 comprises further a relay driver switch 40. The relay driver switch 40 is interconnected between the power supply 60 and the coil 32 in one of the power supply lines PL1, PL2. In the present case, the relay driver switch 40 is integrated in the first power supply line PL1. Thus, the relay driver switch 40 in this preferred example is realized as a high side driver switch. This advantageously implies that the coil 32 is directly connected to the second voltage terminal V2. However, the relay driver switch may in other embodiments be realized as a low side driver switch.

Further, the relay control system 10 may comprise a controller 50, i.e. a microcontroller. The controller 50 is connected in parallel to the relay driver switch 40 through relay driver control lines RL1; RL2. The controller 50 controls the relay driver switch 40. A first relay driver control line RL1 may interconnect a first voltage output terminal of the controller 50 with the relay driver switch 40, while the second relay driver control line RL2 may interconnect a second voltage output terminal with the relay driver switch 40.

In this particular example, the first power supply line PL1 among the power supply lines PL1; PL2 is routed across the interface 20, but the invention is not restricted thereto. That is, a first part of the first power supply line PL1 is electrically connected to the interface terminal I1 and a second part of the first power supply line P2 is continued from the interface terminal I2 to the coil 32 of the relay 30. Thus, the first power supply line PL1 is lead through the interface 20 or routed across the interface 20. The first power supply line PL1 may be routed across the interface 20 between the relay driver switch 40 and the coil 32. That is, the interface 20 may be positioned between the relay driver switch 40 and the coil 32 of the relay 30.

In detail, the power supply line PL1 is electrically conductive across the interface 20, when the connector 22 is connected to the interface 20. Then, the conductive section of the connector 22 forms an electric continuation across the interface 20. Thus, when the connector 22 is connected to the interface 20, the first power supply line PL1 is non-interrupted or conductive across the interface 20. Otherwise, the power supply line PL1 is electrically interrupted or non-conductive across the interface 20, when the connector 22 is detached or removed from the interface 20. The removing may be a mechanical removing by a user for example for service purposes.

In response to the detachment of the connector 22, the relay control system 10 is configured to open the relay 30, when the first power supply line PL1 is interrupted. In this particular example, when the power supply line PL1 is interrupted in response to the connector 22 being detached from the interface 20, the relay 30 is configured to open. In this case, since the power supply line PL1 is interrupted, the current flow through the coil 32 is interrupted or blocked. Thus, in direct response to the detachment of the connector 22, the relay 30 is opened since the current through the coil 32 is blocked due to the interruption of the power supply line PL1 across the interface 20.

The present embodiment therefore provides an intrinsic opening of the relay 30 by using the power supply lines PL1; PL2 such that the interruption of the power line can directly lead to an opening of the relay 30. That is, the power supply lines PL1, PL2 directly sense the interrupt and open the relay 30. Therefore, the reaction time is particularly fast, and no additional hardware is needed and it is only required to lead the power supply line PL1 across the interface 20 such that the connector 22, when removed, interrupts the power supply line PL1.

Further, also a battery system 100 comprising a relay control system 10 is described. For example, the battery system 10 may comprise a plurality of battery cells 110 electrically connected between a first output terminal 111 and second output terminal 112. The first output terminal 111 may refer to the high output voltage. Further, output power lines may be respectively connected to the first output terminal 111 and the second output terminal 112. In this particular example, the relay 30, 34 is integrated in the power line connected to the high output voltage, i.e. the first output terminal 111. Further, a load 115 may be electrically connected in parallel to the plurality of battery cells 110.

Therefore, when the relay 30, 34 is opened in response to the connector 22 being detached from the interface 20, the battery becomes disconnected through the opening of the relay 30, 34. For example, in response to the opening of the relay 30, the exemplary load 115 becomes disconnected from the battery voltage and thus hazardous voltages are removed.

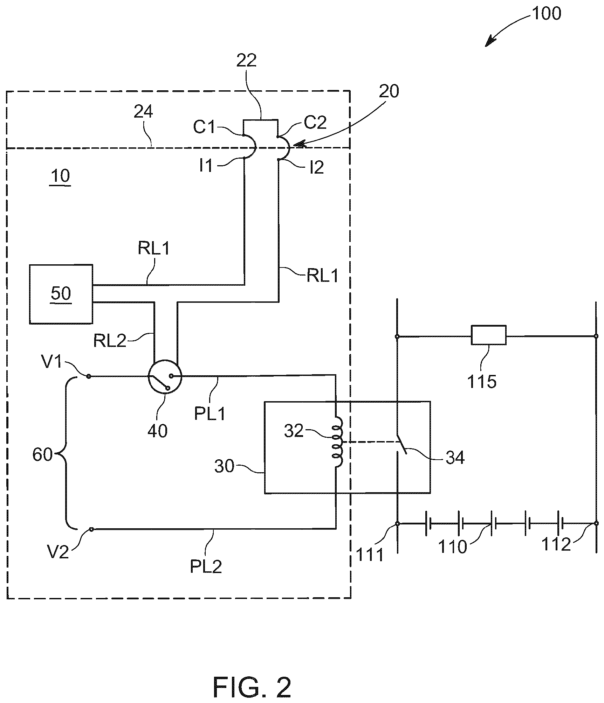

Fig. 2 shows a schematic illustration of a relay control system 10 and a battery system 100 according to a second embodiment of the invention. Redundant description with respect to Fig. 1 is omitted for the sake of conciseness. Details described to same features in Figure 1 above also apply to the embodiment described below and may be only omitted for the purpose of conciseness and for this details it is referred to the above description.

That is, the relay control system 10 for a battery system 100 according to the present embodiment comprises as well an electrical interface 20 to which a connector 22 is detachably connected. The power supply 60 is electrically connected in parallel to a coil 32 of a relay 30 through power supply lines PL1, PL2. The relay driver switch 40 is interconnected between the power supply 60 and the coil 32 in one of the power supply lines PL1, PL2. The controller 50, i.e. the microcontroller, is electrically connected in parallel to the relay driver switch 40 by relay driver control lines RL1; RL2 to control the relay driver switch 40. The relay driver switch may be as well a high side driver switch.

In the present embodiment, in opposite to the embodiment of Figure 1, one among the relay driver control lines RL1; RL2 is routed across the interface 20. Preferably, it is the first relay driver control line RL1 which is routed across the interface 20. In other embodiments, the second relay driver control line RL2 may be used. In particular, the first relay driver control line RL1 routed across the interface 20 may interconnect a first output terminal of the controller 50 with the relay driver switch 40. The second relay driver control line RL2 may be directly connected to the relay driver switch 40.

The interface 20 is configured in the same manner as in Figure 2. That is, the first relay driver control line RL1 is electrically conductive across the interface 20, when the connector 22 is connected to the interface 20. Further, the relay driver control line RL1 is electrically interrupted across the interface 20, when the connector 22 is detached from the interface 20. In detail, a first part of the first relay driver control line RL1 is electrically connected to the first interface terminal I1 and a second part of the first relay driver control line RL2 is continued from the second interface terminal I2 to the relay driver switch 40. The conductive section of the connector 22 forms an electric continuation across the interface 20 for the first relay driver control line. Thus, when the connector 22 is connected to the interface 20, the first relay driver control line RL1 is non-interrupted. Otherwise, the first relay driver control line RL1 is electrically interrupted, i.e. non-conductive, across the interface 20, when the connector 22 is detached or removed from the interface 20.

Also in this case, the relay control system 10 is configured to open the relay 30, when the relay driver control lines RL1 is interrupted in response to the connector 22 being detached from the interface 20.

In the present case, it is the relay driver switch 40 which is configured to open the relay 30, when the relay driver control line RL1 is interrupted in response to the connector 22 being detached from the interface 20. Therefore, the relay 30 is not directly opened compared to the embodiment of Fig. 1, but is opened via the relay driver switch 40. For example, when the relay driver switch 40 is opened in response to the connector 22 being detached as described above, the first power line PL1 is interrupted or disconnected from the power supply 60, such that the current flow through the coil 32 is interrupted or blocked. This may then result in the opening of the relay 30. Thus, the relay can be opened by using the relay driver control lines to sense the interruption due to the detachment of the connector 22. Since only small voltages, i.e. for example 3,3 V or 5V, and currents are present in the relay driver control circuit, the use of control lines has improved electromagnetic compatibility and thus can be used in environments, where low interference is needed. Also, electric arcs at the interface 20 may be prevented, when the relay control lines RL1, RL2 are used. In particular, the power supply 60 may be configured as an AC power source in this embodiment to save energy but still have high electromagnetic compatibility. However, also a DC power source may be used.

The opening of the relay driver switch 40 can be performed by the following preferred examples. The relay driver switch 40 may be configured to open the relay 30, when a control signal of the controller 50 is interrupted in response to the connector 22 being detached from the interface 20. For example, the relay driver switch 40 may receive permanently a control signal to be in the closed state, which may be the default state. When this control signal is interrupted, this interruption is indicative of the connector 22 being detached from the interface 20. Thus, the interruption of the control signal may initiate the opening of the relay driver switch 40.

In an example, the control signal may be a logic high level, i.e. a logic '1', for example 3,3 V or 5V. The interruption of the relay driver control line RL1 interrupts the control signal, such that the logic high level is interrupted, i.e. not received by or not applied to the relay driver switch 40. Also, the control signal may be an electrical current and the relay driver switch 40 is configured to open the relay 30, when the electrical current is interrupted, i.e. blocked, in response to the connector 22 being detached from the interface 20. The interruption of the electric current may thus trigger the relay driver switch 40 to open the relay 30 by disconnecting the coil 32 from the power supply 60.

Also in the present embodiment, a battery system 100 may be described which includes the relay control system 10. For example, the battery system 10 may comprise a plurality of battery cells 110 electrically connected between a first output terminal 111 and second output terminal 112. The first output terminal 111 may refer to the high output voltage. Further, output power lines may be respectively connected to the first output terminal 111 and the second output terminal 112. In this particular example, the relay 34 is integrated in the power line connected to the high output voltage, i.e. the first output terminal 111. Further, a load 115 may be electrically connected in parallel to the plurality of battery cells 110.

When using one of the power supply lines or the relay driver control lines in both embodiments to be routed across the interface 20, detaching of the connector 22 is directly recognizable through these internal control lines and detachment is directly sensed and can be directly used to open the relay 30. Safety is increased, since no additional failure rates need to be considered. Further, the reaction time is fast as there is no HVIL and no additional hardware and software units involved.

### Reference signs

- 10: relay control system

- 20: interface
- 22: connector
- 24: support panel

- 30, 34: relay
- 32: coil

- 40: relay driver switch

- 50: controller/microcontroller

- 60: power supply
- V1: first voltage terminal
- V2: second voltage terminal
- PL1: power supply line
- PL2: power supply line

- RL1: relay driver control line
- RL2: relay driver control line

- C1, C2: first/second connector terminal
- I1, I2: first/second interface terminal

- 100: battery system
- 111: first output terminal
- 112: second output terminal
- 115: load

## Claims

1. A relay control system (10) for a battery system (100), comprising:
- an electrical interface (20) to which a connector (22) is detachably connected;
- a power supply (60) electrically connected in parallel to a coil (32) of a relay (30) through power supply lines (PL1; PL2);
- a relay driver switch (40) interconnected between the power supply (60) and the coil (32) in one of the power supply lines (PL1; PL2);
- a controller (50) electrically connected in parallel to the relay driver switch (40) through relay driver control lines (RL1; RL2) to control the relay driver switch (40);
**characterized in that**,
one among the relay driver control lines (RL1; RL2) is routed across the interface (20), such that the one relay driver control line (RL1; RL2) is electrically conductive across the interface (20), when the connector (22) is connected to the interface (20), and electrically interrupted across the interface (20), when the connector (22) is detached from the interface (20); and
wherein the relay driver switch (40) is configured to open the relay (30), when the one relay driver control line (RL1; RL2) is interrupted in response to the connector (22) being detached from the interface (20).

2. The relay control system (10) of claim 1, wherein the relay driver switch (40) is configured to open the relay (30), when a control signal of the controller (50) is interrupted in response to the connector (22) being detached from the interface (20).

3. The relay control system (10) of one of the claims 1 to 2, wherein the control signal is a logic high level and the relay driver switch (40) is configured to open the relay (30), when the high level is interrupted in response to the connector (22) being detached from the interface (20).

4. The relay control system (10) of one of the claims 1 to 2, wherein the control signal is an electrical current and the relay driver switch (40) is configured to open the relay (30), when the electrical current is interrupted in response to the connector (22) being detached from the interface (20).

5. The relay control system (10) of one of the claims 1 to 4, wherein the power supply (60) is an AC power supply.

6. The relay control system (10) of one of the claims 1 to 5, wherein the power supply (60) is a DC power supply.

7. The relay control system (10) of one of the claims 1 to 6, wherein the relay driver switch (40) is a high side driver switch.

8. The relay control system (10) of one of the claims 1 to 7, wherein the relay driver switch (40) is a low side driver switch.

9. A battery system (100) comprising a relay control system (10) according to one of the claims 1 - 8.

10. The battery system (100) of claim 9, further comprising:
- a plurality of battery cells (110) electrically connected between a first output terminal (111) and second output terminal (112);
- output power lines respectively connected to the first output terminal (111) and the second output terminal (112), wherein the relay (34) is integrated one of the power lines.

11. A vehicle including a battery system (100) according to claims 9 to 10.

## Patentansprüche

1. Relaissteuerungssystem (10) für ein Batteriesystem (100), umfassend:
- eine elektrische Schnittstelle (20), mit der ein Steckverbinder (22) lösbar verbunden ist;
- eine Leistungsversorgung (60), die über Leistungsversorgungsleitungen (PL1; PL2) elektrisch parallel zu einer Spule (32) eines Relais (30) verbunden ist;
- einen Relaistreiberschalter (40), der zwischen der Leistungsversorgung (60) und der Spule (32) in einer der Leistungsversorgungsleitungen (PL1; PL2) verbunden ist;
- eine Steuerung (50), die elektrisch parallel mit dem Relaistreiberschalter (40) über Relaistreibersteuerleitungen (RL1; RL2) verbunden ist, um den Relaistreiberschalter (40) zu steuern;
**dadurch gekennzeichnet, dass**
eine der Relaistreibersteuerleitungen (RL1; RL2) so durch die Schnittstelle (20) geführt wird, dass die eine Relaistreibersteuerleitung (RL1; RL2) durch die Schnittstelle (20) elektrisch leitend ist, wenn der Steckverbinder (22) mit der Schnittstelle (20) verbunden ist, und durch die Schnittstelle (20) elektrisch unterbrochen ist, wenn der Steckverbinder (22) von der Schnittstelle (20) gelöst ist; und
wobei der Relaistreiberschalter (40) konfiguriert ist, um das Relais (30) zu öffnen, wenn die eine Relaistreibersteuerleitung (RL1; RL2) als Reaktion auf das Lösen des Steckverbinders (22) von der Schnittstelle (20) unterbrochen wird.

2. Relaissteuerungssystem (10) nach Anspruch 1, wobei der Relaistreiberschalter (40) konfiguriert ist, um das Relais (30) zu öffnen, wenn ein Steuersignal der Steuerung (50) als Reaktion auf das Lösen des Steckverbinders (22) von der Schnittstelle (20) unterbrochen wird.

3. Relaissteuerungssystem (10) nach einem der Ansprüche 1 bis 2, wobei das Steuersignal ein logischer High-Pegel ist und der Relaistreiberschalter (40) konfiguriert ist, um das Relais (30) zu öffnen, wenn der High-Pegel als Reaktion auf das Lösen des Steckverbinders (22) von der Schnittstelle (20) unterbrochen wird.

4. Relaissteuerungssystem (10) nach einem der Ansprüche 1 bis 2, wobei das Steuersignal ein elektrischer Strom ist und der Relaistreiberschalter (40) konfiguriert ist, um das Relais (30) zu öffnen, wenn der elektrische Strom als Reaktion auf das Lösen des Steckverbinders (22) von der Schnittstelle (20) unterbrochen wird.

5. Relaissteuerungssystem (10) nach einem der Ansprüche 1 bis 4, wobei die Leistungsversorgung (60) eine AC-Leistungsversorgung ist.

6. Relaissteuerungssystem (10) nach einem der Ansprüche 1 bis 5, wobei die Leistungsversorgung (60) eine DC-Leistungsversorgung ist.

7. Relaissteuerungssystem (10) nach einem der Ansprüche 1 bis 6, wobei der Relaistreiberschalter (40) ein Treiberschalter der High-Seite ist.

8. Relaissteuerungssystem (10) nach einem der Ansprüche 1 bis 7, wobei der Relaistreiberschalter (40) ein Treiberschalter der Low-Seite ist.

9. Batteriesystem (100), umfassend ein Relaissteuerungssystem (10) nach einem der Ansprüche 1-8.

10. Batteriesystem (100) nach Anspruch 9, ferner umfassend:
- eine Vielzahl von Batteriezellen (110), die elektrisch zwischen einem ersten Ausgangsanschluss (111) und einem zweiten Ausgangsanschluss (112) verbunden sind;
- Ausgangsleistungsleitungen, die jeweils mit dem ersten Ausgangsanschluss (111) und dem zweiten Ausgangsanschluss (112) verbunden sind, wobei das Relais (34) in eine der Leistungsleitungen integriert ist.

11. Fahrzeug, das ein Batteriesystem (100) nach den Ansprüchen 9 bis 10 beinhaltet.

## Revendications

1. Système de commande de relais (10) pour un système de batterie (100), comportant :
- une interface électrique (20) à laquelle un connecteur (22) est connecté de manière détachable ;
- une alimentation électrique (60) connectée électriquement en parallèle à une bobine (32) d'un relais (30) par le biais de lignes d'alimentation électrique (PL1 ; PL2) ;
- un commutateur de circuit d'attaque de relais (40) interconnecté entre l'alimentation électrique (60) et la bobine (32) dans l'une des lignes d'alimentation électrique (PL1 ; PL2) ;
- un dispositif de commande (50) connecté électriquement en parallèle au commutateur de circuit d'attaque de relais (40) par le biais de lignes de commande de circuit d'attaque de relais (RL1 ; RL2) pour commander le commutateur de circuit d'attaque de relais (40) ;
**caractérisé en ce que**,
l'une parmi les lignes de commande de circuit d'attaque de relais (RL1 ; RL2) est acheminée à travers l'interface (20), de sorte que l'une des lignes de commande de circuit d'attaque de relais (RL1 ; RL2) soit électriquement conductrice à travers l'interface (20), lorsque le connecteur (22) est connecté à l'interface (20), et électriquement interrompue à travers l'interface (20), lorsque le connecteur (22) est détaché de l'interface (20) ; et
dans lequel le commutateur de circuit d'attaque de relais (40) est configuré pour ouvrir le relais (30), lorsque ladite ligne de commande de circuit d'attaque de relais (RL1 ; RL2) est interrompue lorsque le connecteur (22) est détaché de l'interface (20).

2. Système de commande de relais (10) selon la revendication 1, dans lequel le commutateur de circuit d'attaque de relais (40) est configuré pour ouvrir le relais (30) lorsqu'un signal de commande du dispositif de commande (50) est interrompu lorsque le connecteur (22) est détaché de l'interface (20).

3. Système de commande de relais (10) selon l'une des revendications 1 à 2, dans lequel le signal de commande est un niveau de logique haut et le commutateur de circuit d'attaque de relais (40) est configuré pour ouvrir le relais (30), quand le niveau haut est interrompu lorsque le connecteur (22) est détaché de l'interface (20).

4. Système de commande de relais (10) selon l'une des revendications 1 à 2, dans lequel le signal de commande est un courant électrique et le commutateur de circuit d'attaque de relais (40) est configuré pour ouvrir le relais (30), quand le courant électrique est interrompu lorsque le connecteur (22) est détaché de l'interface (20).

5. Système de commande de relais (10) selon l'une des revendications 1 à 4, dans lequel l'alimentation électrique (60) est une alimentation en courant alternatif.

6. Système de commande de relais (10) selon l'une des revendications 1 à 5, dans lequel l'alimentation électrique (60) est une alimentation en courant continu.

7. Système de commande de relais (10) selon l'une des revendications 1 à 6, dans lequel le commutateur de circuit d'attaque de relais (40) est un commutateur de circuit d'attaque côté haut.

8. Système de commande de relais (10) selon l'une des revendications 1 à 7, dans lequel le commutateur de circuit d'attaque de relais (40) est un commutateur de circuit d'attaque côté bas.

9. Système de batterie (100) comportant un système de commande de relais (10) selon l'une des revendications 1 à 8.

10. Système de batterie (100) selon la revendication 9, comportant en outre :
- une pluralité d'éléments de batterie (110) connectés électriquement entre une première borne de sortie (111) et une deuxième borne de sortie (112) ;
- des lignes d'alimentation de sortie respectivement connectées à la première borne de sortie (111) et à la deuxième borne de sortie (112), dans lequel le relais (34) est intégré à l'une des lignes d'alimentation.

11. Véhicule incluant un système de batterie (100) selon les revendications 9 à 10.
